Europäisches Patentamt

European Patent Office

Office européen des brevets

(19)

(11) Publication number: **0 442 437 A1**

## (12) EUROPEAN PATENT APPLICATION

(21) Application number: **91101934.7**

(22) Date of filing: **12.02.91**

(51) Int. Cl.⁵: **F16H 1/42, H02K 7/116**

(30) Priority: **14.02.90 IT 1936390**

(43) Date of publication of application:
**21.08.91 Bulletin 91/34**

(84) Designated Contracting States:
**BE DE ES FR GB SE**

(71) Applicant: **BREVINI S.P.A.**
**Via Degola, 14**
**I-42100 Reggio Emilia(IT)**

(72) Inventor: **Brevini, Renato**
**Via Vitali, 7**
**I-42100 Reggio Emilia(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Improved differential with reduced overall dimensions.**

(57) The improved differential with reduced overall dimensions comprises a case (2) which rotatably supports a driving shaft (3) which rotates about its own axis (3a) and which rotatably supports two driven shafts (4,5) which rotate about a common axis; the driven shafts (4,5) are connected to the driving shaft (3) by means of the interposition of an epicyclic train (8-11). In the differential according to the invention, the driving shaft (3) is arranged coaxially to the driven shafts (4,5).

Fig. 1

EP 0 442 437 A1

The present invention relates to an improved differential with reduced overall dimensions.

As is known, the power unit of a vehicle is generally constituted by a motor and a differential, with the possible interposition of a gearbox between the motor and the differential and of reduction units between the differential and the wheels. If the motor is hydraulic or electric, or is a motor in which it is possible to vary the rotation speed of the output shaft according to the requirements, the gearbox may be omitted.

In some vehicle types, the output shaft of the motor is arranged so that its axis is perpendicular to the common axis of the two driven shafts of the differential which are connected to the wheels, and the connection between the motor and the differential is provided by means of a bevel gear pair, as occurs for example in most motor vehicles.

In other types of vehicle, the output shaft of the motor is arranged parallel to the common axis of the driven shafts, and the connection between the motor output shaft and the driving shaft of the differential is provided by means of a gear train.

In this last case, the overall dimensions of the motor-differential assembly are reduced, but they nonetheless remain considerable, creating problems in the design of the vehicles.

The aim of the present invention is to solve these problems by providing a differential which allows to reduce the overall dimensions of the motor-differential assembly, particularly in the case of electric, hydraulic or pneumatic motors.

Within the scope of this aim, an object of the invention is to provide a differential which allows to reduce the overall weight of the power unit of vehicles.

Another object of the invention is to provide a differential which, by reducing the weight and dimensions of the power unit, simplifies the design of the entire vehicle.

A further object of the invention is to provide a motor-differential assembly which can be manufactured with reduced production costs.

This aim, these objects and others which will become apparent hereinafter are achieved by an improved differential with reduced overall dimensions, comprising a case which rotatably supports a driving shaft and which rotatably supports two driven shafts, said driven shafts being connected to said driving shaft by means of the interposition of an epicyclic train, characterized in that said driving shaft is arranged coaxially to said driven shafts.

Further characteristics and advantages of the invention will become apparent from the description of a preferred but not exclusive embodiment of the differential according to the invention, illustrated only by way of non-limitative example in the accompanying drawings, wherein:

figure 1 is a schematic sectional view of the power unit of a vehicle with the differential according to the invention;

figure 2 is an enlarged view of a detail of figure 1; and

figure 3 is a schematic sectional view of figure 2, taken along the axis III-III.

With reference to the above figures, the differential according to the invention, generally indicated by the reference numeral 1, comprises a case 2 which rotatably supports a driving shaft 3 which rotates about its axis 3a and which rotatably supports two driven shafts 4 and 5 which rotate about a common axis. The driving shaft and the driven shafts are mutually connected by an epicyclic train, as will be described in greater detail hereinafter.

According to the invention, the driving shaft 3 is arranged coaxially to the driven shafts 4 and 5.

Conveniently, an axial passage 6 is defined in the driving shaft 3 and is traversed by the driven shaft 5.

Said driven shaft 5 is rotatably supported in the axial passage 6 by bearings 7, for example roller bearings, which are arranged in the passage 6 so as to allow relative rotation of the shafts 3 and 5.

In the illustrated embodiment, the driving shaft 3 is rigidly associated with an internal gear 8 which is arranged coaxially to the shaft 3 and meshes with planet gears 9 which in turn mesh with other planet gears 10. The planet gears 9 and 10 are mounted so that their axes 9a and 10a are parallel to the axis 3a on a spider 11 which is constituted by two mutually facing plates with a circular contour.

The spider 11 is keyed on the output shaft 5 and is rotatably supported by the case 2 about the axis 3a by means of a pair of bearings 12a and 12b.

A sun gear 13 is arranged in the space defined between the two plates which compose the spider 11, is coaxial to the shaft 3 and is keyed on the output shaft 4; said sun gear 13 meshes with the gears 10.

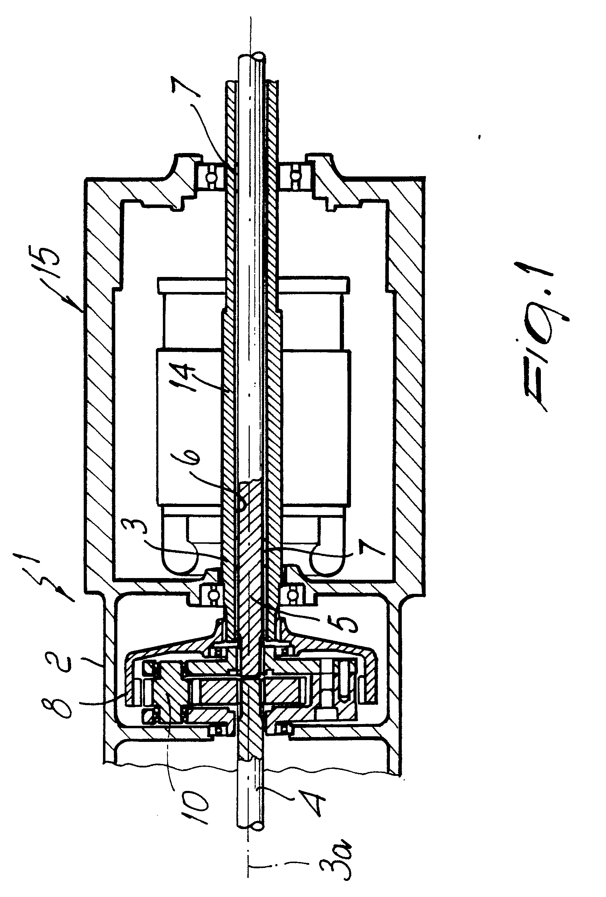

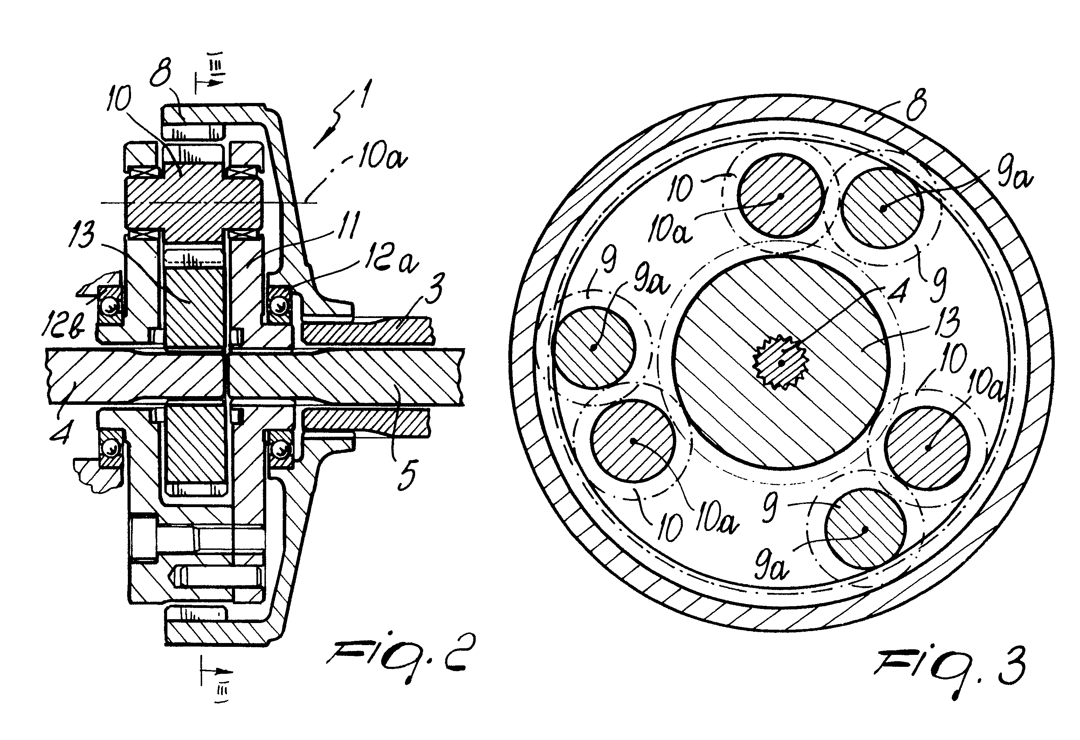

Figure 1 illustrates a preferred embodiment of the differential according to the invention, in which the main shaft 14 of an electric motor 15 is hollow and monolithic with the driving shaft of the differential. In this case, the main shaft 14 is traversed by the output shaft 5 of the differential.

The same arrangement can also be adopted for a hydraulic, pneumatic or similar motor which can vary the rpm rate of the main shaft.

It should be noted that the case 2 of the differential can be obtained from the engine casing itself.

The wheels of the vehicle are mounted on the output shafts 4 and 5, with the possible interposition of braking means and/or reduction units, as in known vehicles.

In practice it has been observed that the differential according to the invention fully achieves the intended aim, since it allows to connect the shaft of a motor directly to the driving shaft of the differential, thus reducing the overall dimensions of the power unit of a vehicle.

Furthermore, the simplicity of execution of the connection between the motor shaft and the driving shaft of the differential, with the elimination of intermediate elements, allows a considerable reduction in production costs with respect to conventional differentials.

Although the concept of the invention has been described with reference to a cylindrical-gear differential, it may also be applied to bevel-gear differentials.

The differential thus conceived is susceptible to numerous modifications and variations, all of which are within the scope of the inventive concept; all the details may furthermore be replaced with technically equivalent elements.

In practice, the materials employed, as well as the dimensions, may be any according to the requirements and to the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Improved differential with reduced overall dimensions, comprising a case (2) which rotatably supports a driving shaft (3) which rotates about its own axis (3a) and which rotatably supports two driven shafts (4,5) which rotate about a common axis, said driven shafts (4,5) being connected to said driving shaft (3) by means of the interposition of an epicyclic train (8-11), characterized in that said driving shaft (3) is arranged coaxially to said driven shafts (4,5).

2. Differential according to claim 1, characterized in that an axial passage (6) is defined in said driving shaft (3) and is traversed by one (5) of said driven shafts.

3. Differential according to claims 1 and 2, characterized in that said driving shaft (3) is rigidly associated with an internally toothed gear (8) the axis whereof coincides with said common axis (3a), said gear (8) meshing with planet gears (9,10) which are arranged around said common axis (3a) and are rotatably supported by a spider (11) about their own axes (9a, 10a), which are parallel to said common axis (3a), said planet gears (9,10) being kinematically connected to a sun gear (13) which is keyed on one (4) of said two driven shafts, said spider (11) being keyed on the other one (5) of said driven shafts.

4. Motor-differential assembly, characterized in that the main shaft (14) of the motor (15), which constitutes the driving shaft of the differential, is arranged coaxially to the two driven shafts (4,5) of the differential.

5. Motor-differential assembly, according to claim 4. characterized in that said motor is constituted by an electric motor (15).

6. Motor-differential assembly, according to claim 4, characterized in that said motor is constituted by a hydraulic motor.

7. Motor-differential assembly, according to claim 4, characterized in that said motor is constituted by a pneumatic motor.

8. Motor-differential assembly, according to one or more of the preceding claims, characterized in that said main shaft (14) of the motor (15) is hollow and is coaxially traversed by one (5) of said driven shafts of the differential, said driven shaft (5) which passes through said main shaft (14) being rotatable about said common axis (3a) with respect to said main shaft (14).

Fig.1

Fig.3

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | FR-A-2 520 079 (RENAULT)<br>* the whole document *<br>- - - | 1,2,3-5,8 | F 16 H 1/42<br>H 02 K 7/116 |
| Y | US-A-4 525 655 (D.E.WALKER)<br>* abstract; figure 1 *<br>- - - | 3-5,8 | |
| X | ANTRIEBSTECHNIK. vol. 15, no. 1, 1976, MAINZ DE pages 11 - 16; H.W.MÜLLER: "Einheitliche Berechnung von Planetengetrieben"<br>* page 11; figure 2f *<br>- - - | 1,2 | |
| A | US-A-4 467 230 (R.S.ROVINSKY)<br>* abstract; figure 1 *<br>- - - | 1,2,4,5 | |
| A | DE-A-2 758 556 (MANNESMANN)<br>* figure 1 *<br>- - - - - | 6 | |
| | | | TECHNICAL FIELDS SEARCHED (Int. Cl.5) |
| | | | F 16 H<br>H 02 K |

The present search report has been drawn up for all claims

| Place of search | Date of completion of search | Examiner |
|---|---|---|
| Berlin | 15 May 91 | GERTIG I. |